# EUROPEAN PATENT APPLICATION

(11) **EP 4 712 395 A1**
(43) Date of publication of application: **18.03.2026**
(21) Application number: 24803074.4
(22) Date of filing: 10.05.2024
(51) Int. Cl.: H04L 5/00

(54) **SENSING INFORMATION SWITCHING METHOD AND APPARATUS, CHIP, MODULE DEVICE, AND STORAGE MEDIUM**

(30) Priority: 10.05.2023 CN 202310524989
(71) Applicant: Spreadtrum Communications (Shanghai) Co., Ltd., Shanghai 201203 (CN)
(72) Inventor: HAN, Lifeng, Shanghai 201203 (CN)
(74) Representative: Casalonga
(86) International application number: PCT/CN2024/092176
(87) International publication number: WO 2024/230795

(57) **Abstract**

The present application discloses a sensing information switching method and apparatus, a chip, a module device, and a storage medium. The method comprises: sending first indication information to a target device, the target device being a terminal device or a second access network device; wherein the first indication information indicates a first sensing mode, the first sensing mode being a sensing mode updated by a first sensing service; or, the first indication information indicates parameter configuration information updated by a second sensing mode, the second sensing mode being a sensing mode used for executing the first sensing service; or, the first indication information indicates, for the first sensing service, effective condition information of one or more sensing modes; or, the first indication information indicates, for the first sensing service, switching condition information for switching from a third sensing mode to a fourth sensing mode. The method of the present application can switch the sensing mode of a sensing service, or update the parameter configuration information of a sensing mode, thereby flexibly satisfying the requirements of the sensing service.

## Description

The present application claims priority to CN Patent Application No. 2023105249895, filed with the China National Intellectual Property Administration on May 10 2023, and entitled "SENSING INFORMATION SWITCHING METHOD AND APPARATUS, CHIP, MODULE DEVICE AND STORAGE MEDIUM", the entirety of which is incorporated herein by reference.

### TECHNICAL FIELD

The present invention relates to communications, and particularly to a method, an apparatus, a chip, a module device and a storage medium for switching sensing information.

### BACKGROUND

Technology of communication sensing involves transmitting a sensing signal to a target area or a target object and analyzing the received echo signal of the sensing signal to obtain corresponding information on sensing measurement. For example, by analyzing characteristics of the echo signal in the time, frequency, and Doppler domains, information on environmental change within the target area or information related to the target object may be obtained. For example, information on environmental change may include information about various objects within the target area; and information related to the target object may include location, shape, motion trajectory and speed, etc., of the target object. However, it remains a problem to be solved as how to meet the requirements of sensing services in a flexible way.

### SUMMARY OF THE INVENTION

The present application provides a method, an apparatus, a chip, a module device, and a storage medium for switching sensing information, which facilitate satisfaction of the requirements of sensing services in a flexible way.

In a first aspect, the present application provides a method for switching sensing information. The method comprises:
transmitting first indication information to a target device, the target device being a terminal device or a second access network device;
wherein the first indication information indicates a first sensing mode, the first sensing mode being a sensing mode updated for a first sensing service; or
the first indication information indicates parameter configuration information updated for a second sensing mode, the second sensing mode being a sensing mode used for performing the first sensing service; or
the first indication information indicates information on condition to effectiveness for one or more sensing modes for the first sensing service; or
the first indication information indicates information on switching condition for switching from a third sensing mode to a fourth sensing mode for the first sensing service.

Based on the method described in the first aspect, the sensing mode for a sensing service may be switched or the parameter configuration information for the sensing mode may be updated, thereby meeting the requirement of the sensing service in a flexible way.

In an implementation, the first indication information indicates the first sensing mode. The method further comprises:
transmitting parameter configuration information corresponding to the first sensing mode to the target device.

Based on the implementation, the parameter configuration information corresponding to the first sensing mode may be transmitted to the target device, thereby implementing a successful switch of the sensing mode.

In an implementation, the target device is a terminal device, and the parameter configuration information is carried in Radio Resource Control (RRC) signaling or Medium Access Control-Control Element (MAC-CE) signaling or Downlink Control Information (DCI) signaling.

In an implementation, the first indication information indicates the first sensing mode. Before the transmitting the first indication information to the target device, the method further comprises: transmitting parameter configuration information corresponding to a plurality of sensing modes for the first sensing service to the target device; wherein the first sensing mode is one of the plurality of sensing modes.

Based on the implementation, parameter configuration information corresponding to the plurality of sensing modes may be configured for the target device in advance, facilitating success of a subsequent switch of the sensing mode. Moreover, based on the implementation, it is not necessary to transmit parameter configuration information updated for the sensing mode every time the sensing mode is switched, facilitating signaling overhead reduction.

In an implementation, the target device is a terminal device, and the first indication information is carried in RRC signaling, or Medium Access Control-Control Element (MAC-CE) signaling or Downlink Control Information (DCI) signaling. By carrying the first indication information in RRC signaling, MAC-CE signaling, or DCI signaling, the sensing mode for the first sensing service may be switched promptly.

In an implementation, the first indication information indicates the first sensing mode. The method further comprises: receiving second indication information transmitted by the target device, the second indication information indicating a sensing mode recommended/preferred for the first sensing service.

Based on the implementation, an appropriate sensing mode may be determined for the first sensing service to switch to, further improving the sensing performance of the first sensing service.

In an implementation, the first indication information indicates the first sensing mode via a bitmap, where different bit positions in the bitmap correspond to different sensing modes.

Based on the implementation, the first sensing mode may be indicated to the target device accurately.

In an implementation, the parameter configuration information includes one or more of: configuration information for a sensing signal, configuration information for reporting of a sensing measurement, configuration information for a sensing type, configuration information for a sensing role, and identification information of a terminal transmitting the sensing signal.

In an implementation, the information on condition to effectiveness comprises one or more of:
time information, location information of the terminal device, a threshold for quality of signal, and location information of an object being sensed.

In an implementation, the information on switching condition indicates one or more of:
time information, location information of the terminal device, a threshold for quality of signal, and location information of an object being sensed.

In an implementation, the first indication information indicates information on condition to effectiveness for one or more sensing modes for the first sensing service, or the first indication information indicates information on switching condition for switching from the third sensing mode to the fourth sensing mode for the first sensing service. The method further comprises: receiving third indication information transmitted by the target device, the third indication information indicating that a switch of a sensing mode has been performed.

Based on the implementation, the first access network device is enabled to be informed of the situation on the switch of the sensing mode for the target device.

In an implementation, the third indication information further indicates an updated sensing mode.

Based on the implementation, the first access network device is enabled to be informed of the sensing mode to which the target device switches.

In a second aspect, the present application provides a method for switching sensing information. The method comprises:
receiving first indication information transmitted by a first access network device;
wherein the first indication information indicates a first sensing mode, the first sensing mode being a sensing mode updated for a first sensing service; or
the first indication information indicates parameter configuration information updated for a second sensing mode, the second sensing mode being a sensing mode used for performing the first sensing service; or
the first indication information indicates information on condition to effectiveness for one or more sensing modes for the first sensing service; or
the first indication information indicates information on switching condition for switching from a third sensing mode to a fourth sensing mode for the first sensing service.

In an implementation, the first indication information indicates the first sensing mode. The method further comprises:
receiving parameter configuration information corresponding to the first sensing mode transmitted by the first access network device.

In an implementation, the parameter configuration information is carried in Radio Resource Control (RRC) signaling or Medium Access Control-Control Element (MAC-CE) signaling or Downlink Control Information (DCI) signaling.

In an implementation, the first indication information indicates the first sensing mode. The method further comprises:
receiving parameter configuration information corresponding to a plurality of sensing modes for the first sensing service transmitted by the first access network device;
wherein the first sensing mode is one of the plurality of sensing modes.

In an implementation, the first indication information is carried in Medium Access Control-Control Element (MAC-CE) signaling or Downlink Control Information (DCI) signaling.

In an implementation, the first indication information indicates the first sensing mode. The method further comprises:
transmitting second indication information to the first access network device, the second indication information indicating a sensing mode recommended/preferred for the first sensing service.

In an implementation, the first indication information indicates the first sensing mode via a bitmap, where different bit positions in the bitmap correspond to different sensing modes.

In an implementation, the parameter configuration information includes one or more of: configuration information for a sensing signal, configuration information for reporting of a sensing measurement, configuration information for a sensing type, configuration information for a sensing role, and identification information of a terminal transmitting the sensing signal.

In an implementation, the information on condition to effectiveness comprises one or more of:
time information, location information of the terminal device, a threshold for quality of signal, and location information of an object being sensed.

In an implementation, the first indication information indicates information on condition to effectiveness for one or more sensing modes for the first sensing service. The method further comprises:
performing the first sensing service using a fifth sensing mode in response to a condition to effectiveness corresponding to the information on condition to effectiveness for the fifth sensing mode is satisfied, the fifth sensing mode being one of the one or more sensing modes.

In an implementation, the method further comprises: stopping performing the first sensing service using the fifth sensing mode in response to the condition to effectiveness corresponding to the information on condition to effectiveness for the fifth sensing mode is not satisfied.

In an implementation, after stopping performing the first sensing service using the fifth sensing mode, the method further comprises: suspending or stopping performing the first sensing service in response to an absence of an effective sensing mode.

In an implementation, the information on switching condition indicates one or more of:
time information, location information of the terminal device, a threshold for quality of signal, and location information of an object being sensed.

In an implementation, the first indication information indicates information on switching condition for switching from a third sensing mode to a fourth sensing mode for the first sensing service. The method further comprises:
switching the sensing mode for the first sensing service from the third sensing mode to the fourth sensing mode in response to a switching condition corresponding to the information on switching condition is satisfied.

In an implementation, the first indication information indicates information on condition to effectiveness for one or more sensing modes for the first sensing service, or the first indication information indicates information on switching condition for switching from the third sensing mode to the fourth sensing mode for the first sensing service. The method further comprises:
transmitting third indication information to the first access network device, the third indication information indicating that a switch of a sensing mode has been performed.

In an implementation, the third indication information further indicates an updated sensing mode.

The beneficial of the second aspect may be referred to the beneficial of the first aspect, which is not repeated herein.

In a third aspect, the present application provides a method for processing sensing service. The method comprises:
transmitting indication information to a target device in response to a sensing mode updated for a first sensing service is not supported by the target device, the indication information indicating to the target device to stop performing the first sensing service, the target device being a terminal device or a second access network device.

Based on the method described in the third aspect, the target device may be notified promptly to stop performing the first sensing service when the sensing mode updated for the first sensing service is not supported by the target device, thereby saving power consumption of the target device.

In a fourth aspect, the present application provides a method for processing sensing service. The method comprises:
receiving indication information transmitted by a first access network device, the indication information indicating to a target device to stop performing a first sensing service, the target device being a terminal device or a second access network device, and the target device not supporting a sensing mode updated for the first sensing service.

The beneficial of the fourth aspect may be referred to the beneficial of the third aspect, which is not repeated herein.

In a fifth aspect, the present application provides a communication apparatus. The apparatus comprises units for performing the above method of the first aspect or the second aspect or the third aspect or the fourth aspect.

In a sixth aspect, the present application provides a chip. The chip includes a processor and a communication interface. The processor is configured to cause the chip to perform the above method according to the first aspect or the second aspect or the third aspect or the fourth aspect.

In a seventh aspect, the present application provides a module device. The module device comprises a communication module, a power module, a storage module, and a chip, wherein: the power module is configured to provide power for the module device; the storage module is configured to store data and instructions; the communication module is configured for internal communication of the module device, or for communication between the module device and external devices; and the chip is configured to perform the above method of the first aspect or the second aspect or the third aspect or the fourth aspect.

In an eighth aspect, an embodiment of the present invention discloses a communication device. The communication device comprises a memory and a processor. The memory is configured to store a computer program. The computer program comprises program instructions. The processor is configured to invoke the program instructions to perform the above method described in the first aspect or the second aspect or the third aspect or the fourth aspect.

In a ninth aspect, the present application provides a computer-readable storage medium. The computer storage medium stores computer-readable instructions, when being executed on a communication apparatus, causing the communication apparatus to perform the above method described in the first aspect or the second aspect or the third aspect or the fourth aspect.

In a tenth aspect, the present application provides a computer program or a computer program product, comprising code or instructions, when being executed on a computer, causing the computer to perform the above method described in the first aspect or the second aspect or the third aspect or the fourth aspect.

In an eleventh aspect, the present application provides a communication system, comprising a first access network device and a target device. The first access network device is configured to perform the method described in the first aspect, and the target device is configured to perform the method described in the second aspect. Or the first access network device is configured to perform the method described in the third aspect, and the target device is configured to perform the method described in the fourth aspect.

### BRIEF DESCRIPTION OF THE DRAWINGS

For illustrating the technical solutions in the embodiments of the present application more clearly, the drawings for describing the embodiments will be introduced briefly below. Apparently, the drawings described below are only some embodiments of the present invention. For a person of ordinary skill in the art, other drawings may be obtained according to the drawings without creative efforts.
FIG. 1 is a schematic diagram of a system architecture provided by an embodiment of the present application;
FIG. 2A is a schematic diagram of mode for sensing mode 1 provided by an embodiment of the present application;
FIG. 2B is a schematic diagram of mode for sensing mode 2 provided by an embodiment of the present application;
FIG. 2C is a schematic diagram of mode for sensing mode 3 provided by an embodiment of the present application;
FIG. 2D is a schematic diagram of mode for sensing mode 4 provided by an embodiment of the present application;
FIG. 2E is a schematic diagram of mode for sensing mode 5 provided by an embodiment of the present application;
FIG. 2F is a schematic diagram of mode for sensing mode 6 provided by an embodiment of the present application;
FIG. 3 is schematic flowchart of a method for switching sensing information provided by an embodiment of the present application;
FIG. 4 is schematic flowchart of a method for switching sensing information provided by an embodiment of the present application;
FIG. 5 is schematic flowchart of a method for switching sensing information provided by an embodiment of the present application;
FIG. 6 is schematic flowchart of a method for switching sensing information provided by an embodiment of the present application;
FIG. 7 is schematic flowchart of a method for processing a sensing service provided by an embodiment of the present application;
FIG. 8 is a schematic structural diagram of a communication apparatus provided by an embodiment of the present application;
FIG. 9 is a schematic structural diagram of a communication device provided by an embodiment of the present application; and
FIG. 10 is a schematic structural diagram of a module device provided by an embodiment of the present application.

### DETAILED DESCRIPTION OF EMBODIMENTS

The technical solutions in the embodiments of the present application will be described clearly and completely below with reference to the drawings in the embodiments of the present application. Apparently, the described embodiments are merely some but not all of the embodiments of the present invention. All other embodiments obtained by a person of ordinary skill in the art based on the embodiments of the present invention without creative efforts shall fall within the protection scope of the present invention.

The terms used in the following embodiments of the present application are for the purpose of describing specific embodiments only and are not intended to limit the present application. As used in the specification and appended claims of the present application, the singular forms "a", "an", "the", "said", "that", and "this" are intended to include the plural forms as well, unless it is explicitly indicated otherwise.

The term "and/or" in an embodiment of the present application describes a relationship between related objects, indicating that three relationships may exist. For example, A and/or B may indicate: A alone, both A and B, or B alone. A and B may be in forms of singular or plural.

In an embodiment of the present application, the character "/" may indicate that the related objects before and after it have an "or" relationship. In addition, the character "/" may further represent a division sign, i.e., performing a division operation. For example, A/B may indicate that A is divided by B.

The term "at least one of" or similar terms in an embodiment of the present application refer to any combination of items, including a single item or any combination of a plurality of items, meaning one or multiple items, where multiple means two or more. For example, at least one of a, b, or c may indicate the following seven cases: a, b, c, a and b, a and c, b and c, and a, b, and c. Each of a, b, and c may be an element or a set containing one or more elements.

The term "equal to" in an embodiment of the present application may be used with "greater than", applicable to the technical solution when "greater than" is used, or may be used with "less than", applicable to the technical solution when "less than" is used. When "equal to" is used with "greater than", it is not used with "less than"; and when "equal to" is used with "less than", it is not used with "greater than".

It should be noted that the terms "first", "second", "third", etc. in the specification and claims and the above drawings of the present application are used to distinguish similar objects and do not indicate a specific sequence or order. It should be understood that the data used as such herein may be interchanged under appropriate circumstances so that the embodiments of the present application described herein may be implemented in sequences other than those illustrated or described herein. Furthermore, the terms "comprise/include" and any variations thereof are intended to cover non-exclusive inclusion. For example, processes, methods, systems, products, or servers that comprise/include a series of steps or units are not limited to those clearly listed steps or units, but may include other steps or units not clearly listed or inherent to these processes, methods, products, or devices.

To facilitate understanding of the embodiments of the present application, the system architecture involved in the present application is set forth below.

The present application may be applied to a fifth-generation (5G) system, also known as a new radio (NR) system; or to a sixth-generation (6G) system, or a seventh-generation (7G) system, or other future communication systems; or may further be used in a device-to-device (D2D) system, a machine-to-machine (M2M) system, a vehicle-to-everything (V2X) system, and the like.

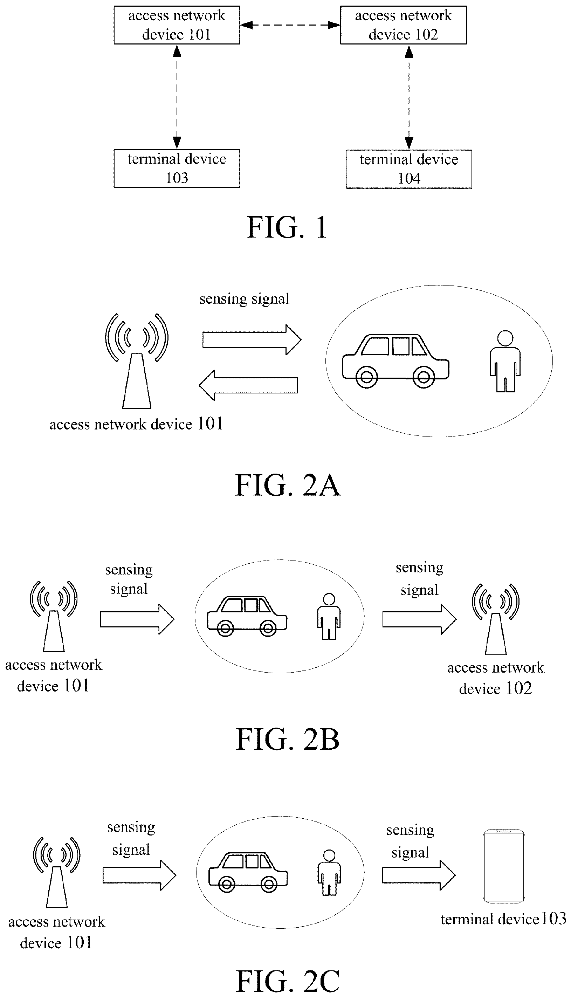

The present application may be applied to the system architecture shown in FIG. 1. The communication system shown in FIG. 1 may include, but is not limited to: an access network device 101, an access network device 102, a terminal device 103, and a terminal device 104. The number and form of devices in FIG. 1 are for illustration only and do not constitute a limitation on the embodiments of the present application. For example, more access network devices and more terminal devices may be included in practical applications.

### 1. Terminal Device

A terminal device may be a device with transceiver functionality, and may also be referred to as a terminal, a user equipment (UE), a remote user equipment (remote UE), a relay user equipment (relay UE), an access terminal device, a user unit, a user station, a mobile station, a mobile platform, a remote station, a mobile device, a user terminal device, a smart terminal device, a wireless communication device, a user agent, or a user device. It should be noted that a relay UE is a terminal device capable of providing services of relay forwarding for other terminal devices (including remote UEs).

For example, the terminal device may be a mobile phone, a tablet computer (pad), a computer with wireless transceiver capabilities, a virtual reality (VR) terminal device, an augmented reality (AR) terminal device, and a wireless terminal device in industrial control, a wireless terminal device in unmanned autonomous driving, a wireless terminal device in remote medical care, a wireless terminal device in a smart grid, a wireless terminal device in transportation safety, a wireless terminal device in a smart city, or a wireless terminal device in a smart home, etc.

As another example, the terminal device may also be a cellular phone, a cordless phone, a session initiation protocol (SIP) phone, a wireless local loop (WLL) station, a personal digital assistant (PDA), a handheld device with functionality of wireless communication, a computing device, or another processing device connected to a wireless modem, an in-vehicle device, a wearable device, and a terminal device in a next-generation communication system (e.g., an NR communication system, a 6G communication system), or a terminal device in a future evolved Public Land Mobile Network (PLMN), etc., which is not limited specifically herein.

In some implementations, the terminal device may be deployed on land, including indoor or outdoor, handheld, wearable, or vehicle-mounted; it may be deployed on water (e.g., ships, etc.); and it may be deployed in the air (e.g., aircraft, balloons, and satellites, etc.).

In some implementations, the terminal device may include an apparatus with functionality of wireless communication, e.g. a chip system, a chip, or a chip module. For example, the chip system may include a chip and may also include other discrete devices.

In some implementations, the terminal device described in the embodiments of the present application may be a chip, a chip module, an apparatus, a unit, etc., which is not limited specifically herein.

### 2. Access Network Device

An access network device may be a device with transceiver functionality, which may be used to communicate with terminal devices.

In some implementations, the access network device may be responsible for radio resource management (RRM), quality of service (QoS) management, compression and encryption of data, and transmission and reception of data, etc. on the air interface.

In some implementations, the access network device may include a Base Station (BS) in a communication system or a device deployed in a Radio Access Network (RAN) for providing functionality of wireless communication, i.e., the access network device may include a device in the RAN.

For example, the device in the RAN may include an evolved node B (eNB or eNodeB) in an LTE communication system, a next generation evolved node B (ng-eNB) in an NR communication system, a next generation node B (gNB) in an NR communication system, a master node (MN) in a dual-connectivity architecture, a second node or secondary node (SN) in a dual-connectivity architecture, etc., which is not limited specifically herein.

In some implementations, the access network device may also be an access point (AP) in a WLAN, a relay station, a communication device in a future evolved PLMN network, and a communication device in an NTN network, etc.

In some implementations, the access network device may include an apparatus with the functionality of providing wireless communication for terminal devices, such as a chip system, a chip, or a chip module. For example, the chip system may include a chip or may include other discrete devices.

In some implementations, the access network device may communicate with an Internet Protocol (IP) network, such as the Internet, a private IP network, or other data networks, etc.

In some implementations, the access network device may include a single independent node, or may include two or more independent nodes to implement the functionalities of the above access network device. For example, the access network device includes a centralized unit (CU) and a distributed unit (DU), such as a gNB-CU and a gNB-DU. Furthermore, in other embodiments of the present application, the access network device may also include an active antenna unit (AAU). The CU implements part of the functionalities of the access network device, and the DU implements another part of the functionalities of the access network device. For example, the CU is responsible for processing non-real time protocols and services, and implementing the functionalities of the radio resource control (RRC) layer, the service data adaptation protocol (SDAP) layer, and the packet data convergence protocol (PDCP) layer. The DU is responsible for processing physical layer protocols and real-time services, and implementing the functionalities of the radio link control (RLC) layer, the Medium Access Control (MAC) layer, and the physical (PHY) layer. Additionally, the AAU may implement some functionalities of physical layer processing, and related functionalities of radio frequency processing and active antennas. Since information at the RRC layer eventually becomes information at the PHY layer, or is transformed from information at the PHY layer, in such network deployment, a higher-layer signaling (such as an RRC signaling) may be considered as being generated by the CU and sent by the DU, or sent by the DU and AAU cooperatively. It may be understood that the access network device may include at least one of the CU, DU, and AAU. Additionally, the CU may be classified as a RAN device, or may also be classified as a core network device, which is not limited specifically herein.

In some implementations, the access network device may be any one of multiple stations performing coherent joint transmission (CJT) with a terminal device, or another station other than the multiple stations, or another access network device communicating with the terminal device over the network, which is not limited specifically herein. A coherent joint transmission between multiple stations may be coherent transmissions jointly performed by multiple stations, or it may involve different data belonging to a same Physical Downlink Shared Channel (PDSCH) being sent from different stations to the terminal device, or it may indicate that multiple stations are virtualized as one station for transmission. Parameters having names with the same meaning specified in other standards are also applicable to the present application, i.e., the present application does not limit the names of these parameters. Stations in coherent joint transmission between multiple stations may be Remote Radio Heads (RRHs), transmission and reception points (TRPs), and access network devices, etc., which are not limited specifically herein.

In some implementations, the access network device may be any one of multiple stations performing non-coherent joint transmission with a terminal device, or another station other than the multiple stations, or another access network device communicating with the terminal device over the network, which is not limited specifically herein. The non-coherent joint transmission between multiple stations may be non-coherent transmissions jointly performed by multiple stations, or it may involve different data belonging to a same PDSCH being sent from different stations to the terminal device. Parameters having names with the same meaning specified in other standards are further applicable to the present application, i.e., the present application does not limit the names of these parameters. Stations in non-coherent joint transmission between multiple stations may be RRHs, TRPs, access network devices, etc., which are not limited specifically herein.

In some implementations, the access network device may be mobile, for example, the access network device may be a mobile device. Alternatively, the access network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Alternatively, the access network device may also be a base station deployed on locations at land, water, etc..

In some implementations, the access network device may provide services for a cell, and terminal devices in the cell may communicate with the access network device over transmission resources (e.g., spectrum resources). The cell may be a macro cell, a small cell, a metro cell, a micro cell, a pico cell, a femto cell, etc.

In some implementations, the access network device described in the embodiments of the present application may be a chip, a chip module, an apparatus, a unit, etc., which is not limited specifically herein.

The system architecture and service scenarios described in the embodiments of the present application are to illustrate the technical solutions of the embodiments of the present application more clearly and do not constitute a limitation on the technical solutions provided by the embodiments of the present application. A person of ordinary skill in the art will understand that as the system architecture evolves and new service scenarios emerge, the technical solutions provided by the embodiments of the present application are equally applicable to similar technical problems.

To facilitate understanding of the solutions provided by the embodiments of the present application, some professional terms involved in the present application are first introduced below:

### 1. Sensing Type

Technology of communication sensing refers to a technology that transmits a sensing signal by using communication capability of a device and performs sensing based on the received echo signal of the sensing signal. According to different sensing targets, sensing services may be classified as the following two types: an area-oriented sensing type and an object-oriented sensing type.

The area-oriented sensing type refers to performing sensing of environmental changes within an area, for example, performing sensing of the real-time status of paths, vehicles, and people in factories, roads, low altitude areas, cities, or even larger spatiotemporal ranges, including obtaining status such as distance, position, shape, motion speed, motion trajectory. The object-oriented sensing type refers to performing sensing of the status of an object, for example, performing sensing and tracking of an object to obtain status such as distance, position, shape, motion speed, motion trajectory, etc., of the object being sensed.

### II. Sensing Mode

In an embodiment of the present application, for access network devices and terminal devices with functionality of sensing, there are six types of sensing modes depending on the transmission and reception of a sensing signal:
In sensing mode 1, an access network device transmits and receives a sensing signal by itself for sensing. For example, as shown in FIG. 2A, the access network device 101 may transmit and receive the sensing signal by itself for the sensing of an area or an object.

In sensing mode 2, access network devices cooperate for sensing. The access network devices cooperating for sensing in the present application means that an access network device transmits a sensing signal, and another access network device receives the sensing signal. For example, as shown in FIG. 2B, the access network device 101 transmits a sensing signal, and the sensing signal, after being affected (e.g., reflected, scattered, etc.) by an area or an object, is received by the access network device 102.

In sensing mode 3, an access network device transmits a sensing signal, and a terminal device receives the sensing signal. For example, as shown in FIG. 2C, the access network device 101 transmits a sensing signal, and the sensing signal, after being affected (e.g., reflected, scattered, etc.) by an area or an object, is received by the terminal device 103.

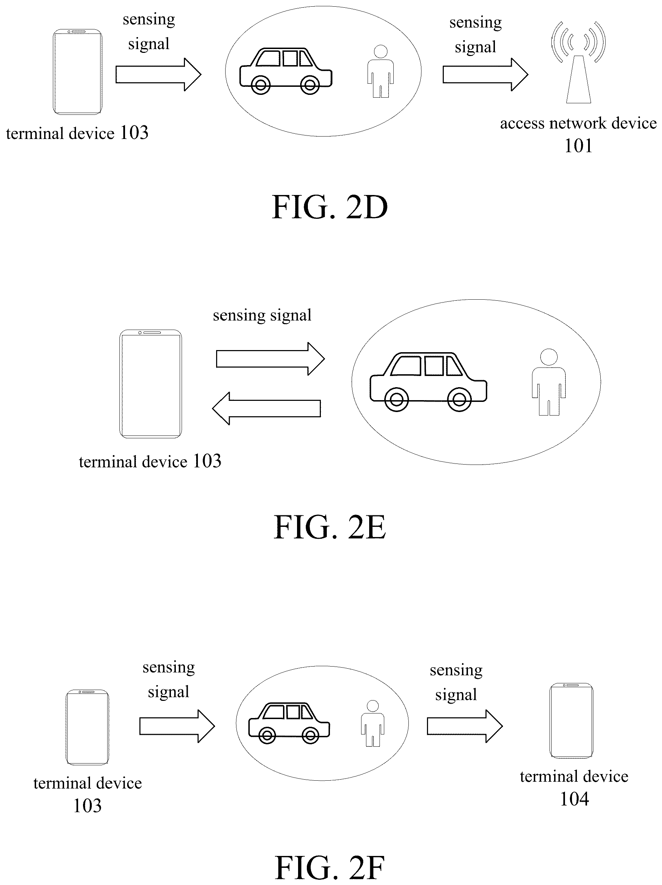

In sensing mode 4, a terminal device transmits a sensing signal, and an access network device receives the sensing signal. For example, as shown in FIG. 2D, the terminal device 103 transmits a sensing signal, and the sensing signal, after being affected (e.g., reflected, scattered, etc.) by an area or an object, is received by the access network device 101.

In sensing mode 5, the terminal device transmits and receives a sensing signal by itself for sensing. For example, as shown in FIG. 2E, the terminal device 103 may transmit and receive the sensing signal by itself for the sensing of an area or an object.

In sensing mode 6, terminal devices cooperate for sensing, i.e., one terminal device transmits a sensing signal, and another terminal device receives the sensing signal. For example, as shown in FIG. 2F, the terminal device 103 transmits a sensing signal, and the sensing signal, after being affected (e.g., reflected, scattered, etc.) by an area or an object, is received by the terminal device 104.

### III. Joint Sensing by Access Network Devices

Alternatively, the joint sensing by access network devices includes, but is not limited to, one or more of:
1. Two access network devices cooperate for sensing, i.e., the two access network devices perform a same sensing service in sensing mode 2, for example, as shown in FIG. 2B.
2. After an access network device performs a certain sensing service for a period of time, another access network device takes over to continue that sensing service. For example, after the access network device 101 performs a sensing service 1 for a period of time, its performance fails to meet the performance requirement of the sensing service 1. The access network device 102 is qualified for the performance requirement of the sensing service 1, so it may take over to continue the sensing service 1.
3. Two access network devices perform a same sensing service simultaneously in sensing mode 1, sensing mode 3, or sensing mode 4, with the first access network device and the second access network device cooperate to perform the sensing service to meet the requirements of the sensing service. For example, after the access network device 101 performs a sensing service 1 for a period of time, it fails to meet the performance requirement of the sensing service 1. Both the access network device 101 and the access network device 102 performing the sensing service 1 would be qualified for the performance requirement of the sensing service 1, thus the access network device 101 and the access network device 102 may be enabled to perform the sensing service 1 simultaneously.

A method, an apparatus, a chip, a module device, and a storage medium, etc. for switching sensing information provided in embodiments of the present application are further described below.

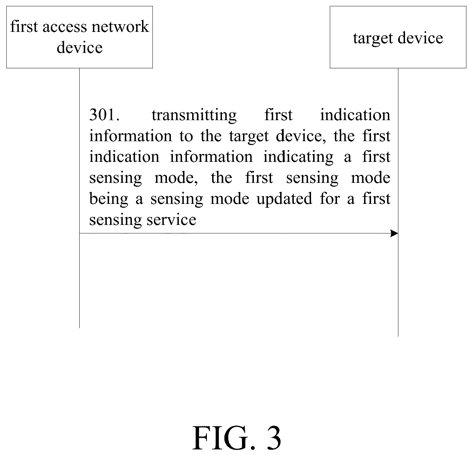

Please refer to FIG. 3, and FIG. 3 is a flowchart of a method for switching sensing information provided by an embodiment of the present application. The method includes step 301. The method shown in FIG. 3 may be performed by a first access network device and a target device, or may be performed by a chip in the first access network device and a chip in the target device. The target device may be a terminal device or a second access network device. Alternatively, the method shown in FIG. 3 may be performed by other types of products, and may be performed by entities extended by those skilled in the art according to the contents disclosed in the specification. The method shown in FIG. 3 is described as being performed by the first access network device and the target device as an example.

301. The first access network device transmits first indication information to the target device, the first indication information indicating a first sensing mode, the first sensing mode being a sensing mode updated for a first sensing service. Accordingly, the target device may receive the first indication information.

In other words, when the sensing mode for the first sensing service changes, the first access network device may notify the target device of the sensing mode updated for the first sensing service via the first indication information. Based on the first indication information, the target device determines the sensing mode updated for the first sensing service and may then perform the first sensing service using the updated sensing mode.

Alternatively, the first sensing service may be any sensing service, which is not limited in the embodiment of the present application.

Alternatively, the first access network device may determine whether to switch the sensing mode for the first sensing service based on factors such as cell load, movement of an object being sensed, movement of the terminal device, etc.

Alternatively, if the target device is a terminal device, the first sensing mode may be one of sensing mode 3, sensing mode 4, sensing mode 5, and sensing mode 6.

If the target device is a second access network device, the first sensing service is a service joint sensed by the first access network device and the second access network device. Related introductions about joint sensing by access network devices may be found in previous descriptions of the professional terms, which are not repeated herein. Alternatively, if the target device is a second access network device, the first sensing mode may be one of sensing mode 1, sensing mode 2, sensing mode 3, sensing mode 4, sensing mode 5, and sensing mode 6.

In an implementation, the first access network device may further transmit parameter configuration information corresponding to the first sensing mode to the target device. Accordingly, the target device may receive the parameter configuration information corresponding to the first sensing mode. Based on the implementation, the parameter configuration information corresponding to the first sensing mode may be transmitted to the target device, thereby the sensing mode may be switched successfully.

In other words, after determining to switch the sensing mode for the first sensing service to the first sensing mode, the first access network device not only indicates the first sensing mode to the target device via the first indication information but also transmits the parameter configuration information corresponding to the first sensing mode to the target device. After receiving the first indication information and the parameter configuration information corresponding to the first sensing mode, the target device may perform the first sensing service in the first sensing mode based on the parameter configuration information corresponding to the first sensing mode, thereby implementing switch of the sensing mode for the first sensing service.

The first indication information and the parameter configuration information corresponding to the first sensing mode may be carried in a same message or in different messages.

Alternatively, if the target device is a terminal device, the parameter configuration information is carried in radio resource control (RRC) signaling or medium access control-control element (MAC-CE) signaling or downlink control information (DCI) signaling.

Alternatively, if the target device is an access network device, the first indication information and the parameter configuration information are carried in messages over the Xn interface or the X2 interface.

In another implementation, before transmitting the first indication information to the target device, the first access network device may further transmit parameter configuration information corresponding to a plurality of sensing modes for the first sensing service to the target device; wherein the first sensing mode is one of the plurality of sensing modes. Accordingly, the target device may receive the parameter configuration information corresponding to the plurality of sensing modes for the first sensing service.

In other words, the first access network device may configure parameter configuration information corresponding to the plurality of sensing modes for the target device in advance. When the first access network device determines to switch the sensing mode for the first sensing service to the first sensing mode, it may activate the first sensing mode of the plurality of sensing modes via the first indication information. Upon receiving the first indication information, the target device may perform the first sensing service in the first sensing mode based on the parameter configuration information corresponding to the first sensing mode, thereby implementing switch of the sensing mode for the first sensing service. Based on the implementation, parameter configuration information corresponding to the plurality of sensing modes may be configured for the target device in advance, facilitating success of a subsequent switch of the sensing mode . Moreover, based on the implementation, it is not necessary to transmit parameter configuration information corresponding to the updated sensing mode every time the sensing mode is switched, facilitating signaling overhead reduction.

Alternatively, if the target device is a terminal device, the parameter configuration information corresponding to the plurality of sensing modes for the first sensing service may be carried in RRC signaling or MAC -CE signaling or DCI signaling.

Alternatively, if the target device is a terminal device, the first indication information may be carried in RRC signaling or MAC-CE signaling or DCI signaling. By carrying the first indication information in RRC signaling, MAC-CE signaling, or DCI signaling, the sensing mode for the first sensing service may be switched promptly.

Alternatively, if the target device is an access network device, the parameter configuration information corresponding to the plurality of sensing modes for the first sensing service and the first indication information may be carried in messages over the Xn interface or the X2 interface.

In an implementation, the parameter configuration information for the first sensing mode includes, but is not limited to, one or more of: configuration information for a sensing signal, configuration information for reporting of sensing measurement, configuration information for a sensing type, configuration information for a sensing role, and identification information of a terminal transmitting the sensing signal.

Alternatively, the configuration information for the sensing signal includes, but is not limited to, configuration information for one or more of: waveform, time domain, frequency domain, codeword, and spatial domain of the sensing signal, etc.

Alternatively, the configuration information for reporting of the sensing measurement includes, but is not limited to, configuration information for one or more of: reporting type, reporting address, and way of reporting, etc. of the sensing measurement.

The reporting type of the sensing measurement includes: reporting sensing measurement data and reporting sensing measurement result. For example, sensing measurement data includes, but is not limited to, quality of signal of the sensing signal, etc. Sensing measurement result refers to a result obtained after processing the sensing measurement data, including, but not limited to, one or more of: position, and movement direction and speed, etc. of a sensing target.

The reporting address of sensing measurement data and/or sensing measurement result includes, but is not limited to, communication addresses, port numbers, identifiers, etc. For example, the reporting address may be one or more of: an IP address, a user datagram protocol (UDP) port number, and a tunnel end point identifier (TEID) of a data collection server, or may be one or more of: an IP address , a UDP port number, and a TEID of the first access network device, or may be an identifier of the first access network device.

The way of reporting of sensing measurement includes, but is not limited to, one or more of: periodic, and event-triggered. For example, when the reporting is periodic, sensing measurement data/sensing measurement result may be reported according to a preset period. For example, when the reporting is event-triggered, for an area-oriented sensing type, the event in the event-triggered reporting may be preset as detection of an object in the area, and then sensing measurement data/sensing measurement result may be reported when an object is detected.

Alternatively, the configuration information for the sensing type includes, but is not limited to, one or more of: area-oriented, and object-oriented.

Alternatively, the configuration information for the sensing role includes a sensing role of the first access network device in the first sensing mode or a sensing role of the target device in the first sensing mode.

The sensing role of the first access network device in the first sensing mode refers to: the first access network device being the transmitter or the receiver of the sensing signal in the first sensing mode. Similarly, the sensing role of the target device in the first sensing mode refers to: the target device being the transmitter or the receiver of the sensing signal in the first sensing mode.

If the configuration information for the sensing role includes the sensing role of the first access network device, the target device may determine the sensing role of the target device based on the sensing role of the first access network device. For example, assuming the sensing role of the first access network device is the transmitter, then the sensing role of the target device is determined to be the receiver.

Alternatively, the identification information of the terminal transmitting the sensing signal includes, but is not limited to, one or more of: a cell-radio network temporary identifier (C-RNTI), and 5G globally unique temporary identifier (5G-S-TMSI).

In an implementation, the first indication information may indicate the first sensing mode via a bitmap, where different bit positions in the bitmap correspond to different sensing modes. Based on the implementation, the first sensing mode may be indicated to the target device accurately.

For example, it is assumed that the mode for the first sensing service may be switched among 4 sensing modes. There are 4 bit positions in the bitmap in total. The first bit corresponds to sensing mode 3, the second bit corresponds to sensing mode 4, the third bit corresponds to sensing mode 5, and the fourth bit corresponds to sensing mode 6. When a value of a bit is 1, it indicates to switch to the sensing mode corresponding to the bit. When the value of a bit is 0, it indicates not to switch to the sensing mode corresponding to the bit. Assuming that the bitmap transmitted by the first access network device to the target device is 0100, then the first access network device indicates to the target device to switch to sensing mode 4.

In another implementation, the first indication information may indicate the first sensing mode via a numerical value. For example, it is assumed that the mode for the first sensing service may be switched among 4 sensing modes. When a value of the first indication information is 00, it indicates to switch to sensing mode 3; when the value of the first indication information is 01, it indicates to switch to sensing mode 4; when the value of the first indication information is 10, it indicates to switch to sensing mode 5; and when the value of the first indication information is 11, it indicates to switch to sensing mode 6.

In an implementation, the target device may further transmit second indication information to the first access network device, the second indication information indicating a sensing mode recommended/preferred for the first sensing service. Accordingly, the first access network device may receive the second indication information.

Thus, upon switch of the sensing mode for the first sensing service by the first access network device, an appropriate sensing mode for the first sensing service may be determined with reference to a sensing mode recommended/preferred by the target device. The first sensing mode determined by the first access network device ultimately may be the same as or different from the sensing mode recommended/preferred by the target device.

Based on the implementation, the first sensing service may be switched to an appropriate sensing mode, so as to improve the performance of sensing of the first sensing service.

As can be seen, based on the method illustrated in FIG. 3, the switch of sensing mode for a sensing service may be implemented, thereby meeting the requirement of the sensing service in a flexible way.

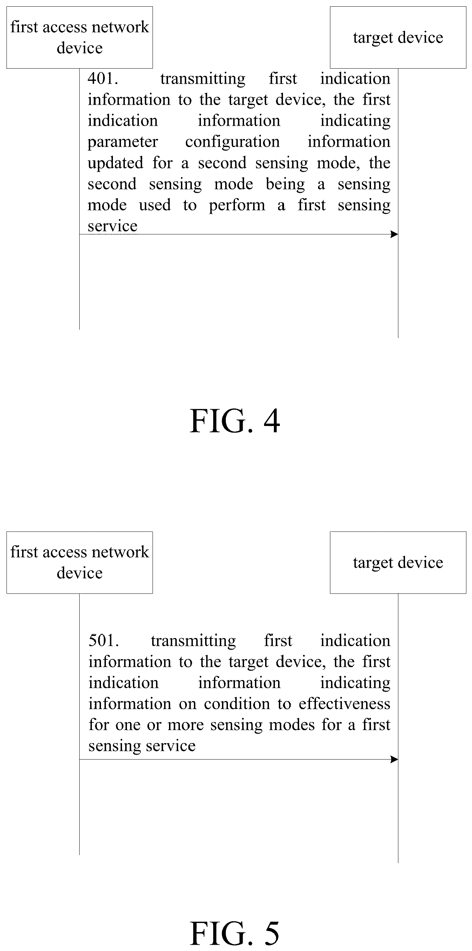

Please refer to FIG. 4, and FIG. 4 is a flowchart of a method for switching sensing information provided by an embodiment of the present application. The method includes step 401. The method shown in FIG. 4 may be performed by a first access network device and a target device, or may be performed by a chip in the first access network device and a chip in the target device. The target device may be a terminal device or a second access network device. Alternatively, the method shown in FIG. 4 may be performed by other types of products, and may be performed by entities extended by those skilled in the art according to the contents disclosed in the specification. The method shown in FIG. 4 is described as being performed by the first access network device and the target device as an example.

401. The first access network device transmits first indication information to the target device, the first indication information indicating parameter configuration information updated for a second sensing mode, the second sensing mode being a sensing mode used to perform a first sensing service. Accordingly, the target device may receive the first indication information.

In other words, when the sensing mode for the first sensing service does not change, if the parameter configuration information for the sensing mode changes, the first access network device may indicate the parameter configuration information updated for the sensing mode to the target device via the first indication information. After receiving the first indication information, the target device may perform the first sensing service in the sensing mode based on the parameter configuration information updated for the sensing mode.

Alternatively, the first sensing service may be any sensing service, which is not limited in the embodiment of the present application.

If the target device is a second access network device, the first sensing service is a service joint sensed by the first access network device and the second access network device. Related introductions about joint sensing by access network devices may be found in previous descriptions of professional terms, which are not repeated herein.

Alternatively, if the target device is a terminal device, the first indication information may be carried in RRC signaling or MAC-CE signaling or DCI signaling.

Alternatively, if the target device is an access network device, the first indication information is carried in messages over the Xn interface or the X2 interface.

In an implementation, the parameter configuration information updated for the second sensing mode includes one or more of: configuration information for a sensing signal, configuration information for reporting of sensing measurement, configuration information for a sensing type, configuration information for a sensing role, and identification information of a terminal transmitting the sensing signal. Introductions on the configuration information for the sensing signal, the configuration information for reporting of the sensing measurement, the configuration information for the sensing type, the configuration information for the sensing role, and the identification information of the terminal transmitting the sensing signal may be found with reference to previous descriptions, which are not repeated herein.

As can be seen, based on the method illustrated in FIG. 4, the update of parameter configuration information for the sensing mode may be implemented, thereby meeting the requirement of the sensing service in a flexible way.

Please refer to FIG. 5, and FIG. 5 is a flowchart of a method for switching sensing information provided by an embodiment of the present application. The method includes step 501. The method shown in FIG. 5 may be performed by a first access network device and a target device, or may be performed by a chip in the first access network device and a chip in the target device. The target device may be a terminal device or a second access network device. Alternatively, the method shown in FIG. 5 may be performed by other types of products, and may be performed by entities extended by those skilled in the art according to the contents disclosed in the specification. The method shown in FIG. 5 is described as being performed by the first access network device and the target device as an example.

501. The first access network device transmits first indication information to the target device, the first indication information indicating information on condition to effectiveness for one or more sensing modes for a first sensing service. Accordingly, the target device may receive the first indication information.

In other words, the first access network device may indicate information on condition to effectiveness for one or more sensing modes to the target device via the first indication information, so that the target device is able to determine an appropriate sensing mode for the first sensing service to switch to based on the information on condition to effectiveness of the one or more sensing modes.

Alternatively, the first sensing service may be any sensing service, which is not limited in the embodiment of the present application.

Alternatively, if the target device is a terminal device, the above one or more sensing modes include one or more of: sensing mode 3, sensing mode 4, sensing mode 5, and sensing mode 6.

Alternatively, if the target device is a second access network device, the above one or more sensing modes include one or more of: sensing mode 1, sensing mode 2, sensing mode 3, sensing mode 4, sensing mode 5, and sensing mode 6.

In an implementation, the information on condition to effectiveness includes, but is not limited to, one or more of: time information, location information of the terminal device, a threshold for quality of signal, and location information of an object being sensed.

Alternatively, the time information may include, but is not limited to, one or more of: a time period starting from a certain time instance, a fixed time interval (e.g., 5:00-7:00 every day), a certain time instance. For example, the fifth sensing mode is any one of the one or more sensing modes. If the information on condition to effectiveness of the fifth sensing mode includes time information, and the time information is 5:00 every day, the sensing mode for the first sensing service is switched by the target device to the fifth sensing mode 5:00 every day.

Alternatively, the location information of the terminal device may include, but is not limited to, one or more of: a cell list, a tracking area code list (TAC list), a geographical area (i.e., latitude and longitude information), a serving cell, and a beam ID and a range of thresholds of signals of a neighboring cell. For example, the target device is a terminal device, and the fifth sensing mode is any one of the one or more sensing modes. If the information on condition to effectiveness of the fifth sensing mode includes location information of the target device, when the information of actual location of the target device is the location information of the target device included in the information on condition to effectiveness, the sensing mode for the first sensing service is switched by the target device to the fifth sensing mode.

Alternatively, the threshold for quality of signal may be a threshold for quality of signal of a certain signal measured by the target device. For example, the target device is a terminal device, and the fifth sensing mode is any one of the one or more sensing modes. If the information on condition to effectiveness of the fifth sensing mode includes a threshold for quality of signal, when the quality of signal of a reference signal of the serving cell measured by the target device is higher than the threshold for quality of signal, the sensing mode for the first sensing service is switched to the fifth sensing mode by the target device. Alternatively, when the quality of signal of the reference signal of the serving cell measured by the target device is lower than the threshold for quality of signal, the sensing mode for the first sensing service is switched to the fifth sensing mode by the target device.

Alternatively, location information of the object being sensed refers to the location information of the object being sensed obtained by the target device by performing sensing measurement for the first sensing service, and the location information may be a range of locations. For example, the fifth sensing mode is any one of the one or more sensing modes. If the information on condition to effectiveness of the fifth sensing mode includes location information of the object being sensed, when the actual location of the object being sensed obtained by the target device performing sensing measurement for the first sensing service is within the range of locations indicated by the location information of the object being sensed included in the information on condition to effectiveness, the sensing mode for the first sensing service is switched to the fifth sensing mode by the target device.

Alternatively, the information on conditions to effectiveness included in different sensing modes of the above one or more sensing modes may be same or different, which is not limited in the embodiment of the present application. For example, it is assumed that the one or more sensing modes include sensing mode 3 and sensing mode 5. The information on condition to effectiveness of sensing mode 3 includes time information and location information of the terminal device. The information on condition to effectiveness of sensing mode 5 includes a threshold for quality of signal and location information of the object being sensed. As another example, it is assumed that the one or more sensing modes include sensing mode 3 and sensing mode 5. The information on condition to effectiveness of sensing mode 3 includes time information and location information of the terminal device. The information on condition to effectiveness of sensing mode 5 includes time information and location information of the terminal device.

In an implementation, after receiving the first indication information, the target device performs the first sensing service using a fifth sensing mode in response to a condition to effectiveness corresponding to the information on condition to effectiveness of the fifth sensing mode is satisfied, the fifth sensing mode being one of the one or more sensing modes.

Alternatively, the target device stops performing the first sensing service using the fifth sensing mode in response to the condition to effectiveness corresponding to the information on condition to effectiveness of the fifth sensing mode is not satisfied. Such an implementation facilitates avoiding the target device reporting errors.

Alternatively, after stopping performing the first sensing service using the fifth sensing mode, the target device suspends or stops performing the first sensing service in response to an absence of an effective sensing mode. If there is an absence of an effective sensing mode and the first sensing service is not suspended or stopped, the target device may not determine how to perform the first sensing service and will report an error. Therefore, the implementation facilitates avoiding the target device reporting errors.

Alternatively, after the target device performs the first sensing service using the fifth sensing mode in response to the condition to effectiveness corresponding to the information on condition to effectiveness of the fifth sensing mode is satisfied, the target device may further transmit third indication information to the first access network device, the third indication information indicating that a switch of a sensing mode has been performed. Accordingly, the first access network device may further receive the third indication information. Based on the implementation, the first access network device is enabled to be informed of the situation on the switch of the sensing mode for the target device.

Alternatively, the third indication information further indicates the updated sensing mode, i.e., the fifth sensing mode. Based on the implementation, the first access network device is enabled to be informed of the sensing mode to which the target device is switched.

As can be seen, based on the method described in FIG. 5, the target device is able to determine an appropriate sensing mode for the first sensing service to switch to based on the information on condition to effectiveness of one or more sensing modes, thereby meeting the requirement of the sensing service in a flexible way. Moreover, based on the method described in FIG. 5, it is not necessary for the first access network device to notify the target device via signaling every time the sensing mode is switched, facilitating signaling overhead reduction.

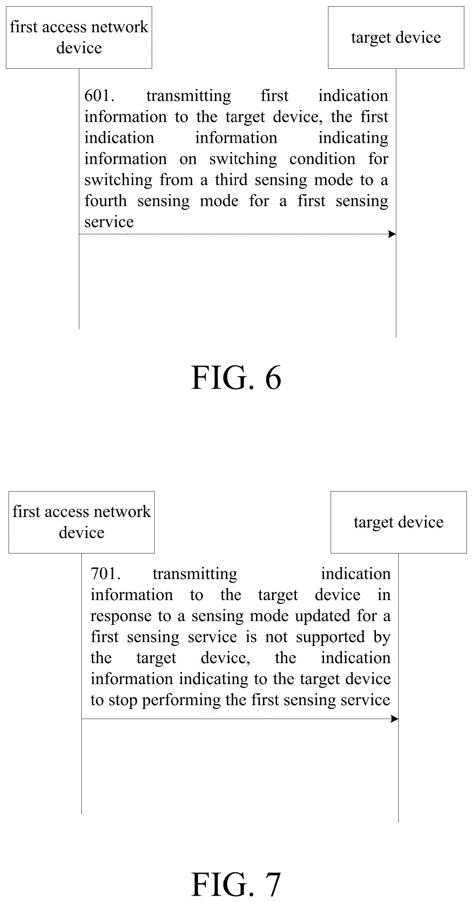

Please refer to FIG. 6, and FIG. 6 is a flowchart of a method for switching sensing information provided by an embodiment of the present application. The method includes step 601. The method shown in FIG. 6 may be performed by a first access network device and a target device, or may be performed by a chip in the first access network device and a chip in the target device. The target device may be a terminal device or a second access network device. Alternatively, the method shown in FIG. 6 may be performed by other types of products, and may be performed by entities extended by those skilled in the art according to the contents disclosed in the specification. The method shown in FIG. 6 is described as being performed by the first access network device and the target device as an example.

601. The first access network device transmits first indication information to the target device, the first indication information indicating information on switching condition for switching from a third sensing mode to a fourth sensing mode for a first sensing service. Accordingly, the target device may receive the first indication information.

In other words, for the first sensing service, the first access network device may indicate information on switching condition for switching from the third sensing mode to the fourth sensing mode to the target device via the first indication information, so that the target device may determine whether to switch the sensing mode for the first sensing service from the third sensing mode to the fourth sensing mode based on the information on switching condition.

Alternatively, the first sensing service may be any sensing service, which is not limited in the embodiment of the present application.

Alternatively, if the target device is a terminal device, the third sensing mode includes one of the following: sensing mode 3, sensing mode 4, sensing mode 5, and sensing mode 6. The fourth sensing mode includes one of the following: te sensing mode 3, sensing mode 4, sensing mode 5, and sensing mode 6. The third sensing mode and the fourth sensing mode are different.

Alternatively, if the target device is a second access network device, the third sensing mode includes one of the following: sensing mode 1, sensing mode 2, sensing mode 3, sensing mode 4, sensing mode 5, and sensing mode 6. The fourth sensing mode includes one of the following: sensing mode 1, sensing mode 2, sensing mode 3, sensing mode 4, sensing mode 5, and sensing mode 6. The third sensing mode and the fourth sensing mode are different.

In an implementation, the information on switching condition indicates one or more of: time information, location information of a terminal device, a threshold for quality of signal, and location information of an object being sensed. Related introductions on the time information, the location information of the terminal device, the threshold for quality of signal, and the location information of the object being sensed may be found with reference to the above descriptions and are not repeated herein.

In an implementation, the target device may also switch the sensing mode for the first sensing service from the third sensing mode to the fourth sensing mode in response to the switching condition corresponding to the information on switching condition is satisfied.

For example, the information on switching condition includes time information, and the time information is 5:00 every day. When the sensing mode currently used for the first sensing service is the third sensing mode, the target device would switch the sensing mode for the first sensing service from the third sensing mode to the fourth sensing mode at 5:00 every day.

For another example, the target device is a terminal device, and the information on switching condition includes location information of the target device. When the actual location information of the target device is the location information of the target device included in the switching condition information and if the sensing mode currently used for the first sensing service is the third sensing mode, the target device would switch the sensing mode for the first sensing service from the third sensing mode to the fourth sensing mode.

As another example, the target device is a terminal device, and the information on switching condition includes a threshold for quality of signal. When the quality of signal of a reference signal of the serving cell measured by the target device is higher than the threshold for quality of signal, if the sensing mode currently used for the first sensing service is the third sensing mode, the target device would switch the sensing mode for the first sensing service from the third sensing mode to the fourth sensing mode. Alternatively, when the quality of signal of the reference signal of the serving cell measured by the target device is lower than the threshold for quality of signal, if the sensing mode currently used for the first sensing service is the third sensing mode, the target device would switch the sensing mode for the first sensing service from the third sensing mode to the fourth sensing mode.

As another example, the information on switching condition includes location information of the object being sensed, and the location information may be a range of locations. When the actual location information of the object being sensed obtained by the target device by performing sensing measurement for the first sensing service is within the range of locations indicated by the location information of the object being sensed included in the switching condition information, if the sensing mode currently used for the first sensing service is the third sensing mode, the target device would switch the sensing mode for the first sensing service from the third sensing mode to the fourth sensing mode.

In an implementation, after the target device switches the sensing mode for the first sensing service from the third sensing mode to the fourth sensing mode in response to the switching condition corresponding to the information on switching condition is satisfied, the target device may further transmit third indication information to the first access network device, the third indication information indicating that a switch of a sensing mode has been performed. Accordingly, the first access network device may further receive the third indication information. Based on the implementation, the first access network device is enabled to be informed of the situation on the switch of the sensing mode for the target device.

In an implementation, the third indication information further indicates the updated sensing mode, i.e., the fourth sensing mode. Based on the implementation, the first access network device is enabled to be informed of the sensing mode to which the target device is switched.

As can be seen, based on the method illustrated in FIG. 6, the target device is able to determine an appropriate sensing mode for the first sensing service to switch to based on the information on switching condition, thereby meeting the requirement of the sensing service in a flexible way. Moreover, based on the method described in FIG. 6, it is not necessary for the first access network device to notify the target device via signaling every time the sensing mode is switched, facilitating signaling overhead reduction.

Please refer to FIG. 7, and FIG. 7 is a flowchart of a method for processing sensing service provided by an embodiment of the present application. The method includes step 701. The method shown in FIG. 7 may be performed by a first access network device and a target device, or may be performed by a chip in the first access network device and a chip in the target device. The target device may be a terminal device or a second access network device. Alternatively, the method shown in FIG. 7 may be performed by other types of products, and may be performed by entities extended by those skilled in the art according to the contents disclosed in the specification. The method shown in FIG. 7 is described as being performed by the first access network device and the target device as an example.

701. The first access network device transmits indication information to the target device in response to a sensing mode updated for a first sensing service is not supported by the target device, the indication information indicating to the target device to stop performing the first sensing service. Accordingly, the target device may receive the indication information.

Since the sensing mode updated for the first sensing service is not supported by the target device, after receiving the indication information, the target device stops performing the first sensing service.

Alternatively, the first sensing service may be any sensing service, which is not limited in the embodiment of the present application.

Alternatively, an identifier of the first sensing service may also be carried in the indication information. Alternatively, the identifier of the first sensing service may be an application layer service identifier, or a communication layer quality of service flow (QoS flow) identifier, or an identifier of a data bearer where the first sensing service is located, or an identifier of a communication session associated with the first sensing service.

As can be seen, based on the method described in FIG. 7, the target device may be notified promptly to stop performing the first sensing service when the sensing mode updated for the first sensing service is not supported by the target device, thereby saving power consumption of the target device.

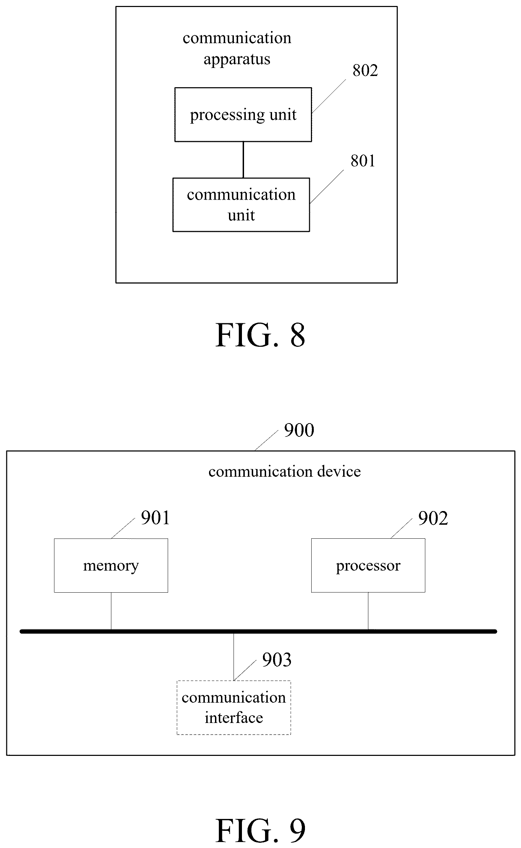

Referring to FIG.8, and FIG. 8 is a schematic structure diagram of a communication apparatus in an embodiment of the present application. The communication apparatus may be used to perform some or all of the functions of the first access network device in the above method embodiments. The apparatus may be a first access network device, or an apparatus within a first access network device, or an apparatus that may be used in conjunction with a first access network device. The communication apparatus may also be a chip system. The communication apparatus shown in FIG. 8 includes a communication unit 801. The communication unit 801 is configured to transmit and receive data. A receiving unit and a transmitting unit are integrated within the communication unit 801. The communication unit 801 may also be referred to as a transceiver unit. Alternatively, the communication unit 801 may be split into a receiving unit and a transmitting unit. Alternatively, the communication apparatus may further include a processing unit 802, and the processing unit 802 is configured to process data.

The communication unit 801 is configured to transmit first indication information to a target device, the target device being a terminal device or a second access network device;
wherein the first indication information indicates a first sensing mode, the first sensing mode being a sensing mode updated for a first sensing service; or
the first indication information indicates parameter configuration information updated for a second sensing mode, the second sensing mode being a sensing mode used for performing the first sensing service; or
the first indication information indicates information on condition to effectiveness for one or more sensing modes for the first sensing service; or
the first indication information indicates information on switching condition for switching from a third sensing mode to a fourth sensing mode for the first sensing service.

In an implementation, the first indication information indicates the first sensing mode, and the communication unit 801 is further configured to transmit parameter configuration information corresponding to the first sensing mode to the target device.

In an implementation, the target device is a terminal device, and the parameter configuration information is carried in Radio Resource Control (RRC) signaling or Medium Access Control-Control Element (MAC-CE) signaling or Downlink Control Information (DCI) signaling.

In an implementation, the first indication information indicates the first sensing mode, and the communication unit 801 is further configured to transmit parameter configuration information corresponding to a plurality of sensing modes for the first sensing service to the target device before transmitting the first indication information to the target device; wherein the first sensing mode is one of the plurality of sensing modes.

In an implementation, the target device is a terminal device, and the first indication information is carried in Medium Access Control-Control Element (MAC-CE) signaling or Downlink Control Information (DCI) signaling.

In an implementation, the first indication information indicates the first sensing mode, and the communication unit 801 is further configured to receive second indication information transmitted by the target device, the second indication information indicating a sensing mode recommended/preferred for the first sensing service.

In an implementation, the first indication information indicates the first sensing mode via a bitmap, where different bit positions in the bitmap correspond to different sensing modes.

In an implementation, the parameter configuration information includes one or more of: configuration information for a sensing signal, configuration information for reporting of a sensing measurement, configuration information for a sensing type, configuration information for a sensing role, and identification information of a terminal transmitting the sensing signal.

In an implementation, the information on condition to effectiveness comprises one or more of:
time information, location information of the terminal device, a threshold for quality of signal, and location information of an object being sensed.

In an implementation, the information on switching condition indicates one or more of:
time information, location information of the terminal device, a threshold for quality of signal, and location information of an object being sensed.

In an implementation, the first indication information indicates information on condition to effectiveness for one or more sensing modes for the first sensing service, or the first indication information indicates information on switching condition for switching from the third sensing mode to the fourth sensing mode for the first sensing service; and the communication unit 801 is further configured to receive third indication information transmitted by the target device, the third indication information indicating that a switch of a sensing mode has been performed.

In an implementation, the third indication information further indicates an updated sensing mode.

Referring to FIG.8, and FIG. 8 is a schematic structure diagram of a communication apparatus in an embodiment of the present application. The communication apparatus may be used to perform some or all of the functions of the target device in the above method embodiments. The apparatus may be a target device, or an apparatus within a target device, or an apparatus that may be used in conjunction with a target device. The communication apparatus may also be a chip system. The communication apparatus shown in FIG. 8 includes a communication unit 801. The communication unit 801 is configured to transmit and receive data. A receiving unit and a transmitting unit are integrated within the communication unit 801. The communication unit 801 may also be referred to as a transceiver unit. Alternatively, the communication unit 801 may be split into a receiving unit and a transmitting unit. Alternatively, the communication apparatus may further include a processing unit 802, and the processing unit 802 is configured to process data.

The communication unit 801 is configured to receive first indication information transmitted by the first access network device;
wherein the first indication information indicates a first sensing mode, the first sensing mode being a sensing mode updated for a first sensing service; or
the first indication information indicates parameter configuration information updated for a second sensing mode, the second sensing mode being a sensing mode used for performing the first sensing service; or
the first indication information indicates information on condition to effectiveness for one or more sensing modes for the first sensing service; or
the first indication information indicates information on switching condition for switching from a third sensing mode to a fourth sensing mode for the first sensing service.

In an implementation, the first indication information indicates the first sensing mode, and the communication unit 801 is further configured to receive parameter configuration information corresponding to the first sensing mode transmitted by the first access network device.

In an implementation, the parameter configuration information is carried in Radio Resource Control (RRC) signaling or Medium Access Control-Control Element (MAC-CE) signaling or Downlink Control Information (DCI) signaling.

In an implementation, the first indication information indicates the first sensing mode, and the communication unit 801 is further configured to receive parameter configuration information corresponding to a plurality of sensing modes for the first sensing service transmitted by the first access network device; wherein the first sensing mode is one of the plurality of sensing modes.

In an implementation, the first indication information is carried in Medium Access Control-Control Element (MAC-CE) signaling or Downlink Control Information (DCI) signaling.

In an implementation, the first indication information indicates the first sensing mode, and the communication unit 801 is further configured to transmit second indication information to the first access network device, the second indication information indicating a sensing mode recommended/preferred for the first sensing service.

In an implementation, the first indication information indicates the first sensing mode via a bitmap, wherein different bit positions in the bitmap correspond to different sensing modes.

In an implementation, the parameter configuration information includes one or more of: configuration information for a sensing signal, configuration information for reporting of a sensing measurement, configuration information for a sensing type, configuration information for a sensing role, and identification information of a terminal transmitting the sensing signal.

In an implementation, the information on condition to effectiveness comprises one or more of:
time information, location information of the terminal device, a threshold for quality of signal, and location information of an object being sensed.

In an implementation, the first indication information indicates information on condition to effectiveness for one or more sensing modes for the first sensing service; and the processing unit 802 is configured to perform the first sensing service using a fifth sensing mode in response to a condition to effectiveness corresponding to the information on condition to effectiveness for the fifth sensing mode is satisfied, the fifth sensing mode being one of the one or more sensing modes.

In an implementation, the processing unit 802 is further configured to stop performing the first sensing service using the fifth sensing mode in response to the condition to effectiveness corresponding to the information on condition to effectiveness for the fifth sensing mode is not satisfied.

In an implementation, the processing unit 802 is further configured to suspend or stop performing the first sensing service in response to an absence of an effective sensing mode after stopping performing the first sensing service using the fifth sensing mode.

In an implementation, the information on switching condition indicates one or more of:
time information, location information of the terminal device, a threshold for quality of signal, and location information of an object being sensed.

In an implementation, the first indication information indicates information on switching condition for switching from a third sensing mode to a fourth sensing mode for the first sensing service; and the processing unit 802 is further configured to switch the sensing mode for the first sensing service from the third sensing mode to the fourth sensing mode in response to a switching condition corresponding to the information on switching condition is satisfied.

In an implementation, the first indication information indicates information on condition to effectiveness for one or more sensing modes for the first sensing service, or the first indication information indicates information on switching condition for switching from the third sensing mode to the fourth sensing mode for the first sensing service; and the communication unit 801 is further configured to transmit third indication information to the first access network device, the third indication information indicating that a switch of a sensing mode has been performed.

In an implementation, the third indication information further indicates an updated sensing mode.

Referring to FIG.8, and FIG. 8 is a schematic structure diagram of a communication apparatus in an embodiment of the present application. The communication apparatus may be used to perform some or all of the functions of the first access network device in the above method embodiments. The apparatus may be a first access network device, or an apparatus within a first access network device, or an apparatus that may be used in conjunction with a first access network device. The communication apparatus may also be a chip system. The communication apparatus shown in FIG. 8 includes a communication unit 801. The communication unit 801 is configured to transmit and receive data. A receiving unit and a transmitting unit are integrated within the communication unit 801. The communication unit 801 may also be referred to as a transceiver unit. Alternatively, the communication unit 801 may be split into a receiving unit and a transmitting unit. Alternatively, the communication apparatus may further include a processing unit 802, and the processing unit 802 is configured to process data.

The communication unit 801 is configured to transmit indication information to a target device in response to a sensing mode updated for a first sensing service is not supported by the target device, the indication information indicating to the target device to stop performing the first sensing service, the target device being a terminal device or a second access network device.

Referring to FIG.8, and FIG. 8 is a schematic structure diagram of a communication apparatus in an embodiment of the present application. The communication apparatus may be used to perform some or all of the functions of the target device in the above method embodiments. The apparatus may be a target device, or an apparatus within a target device, or an apparatus that may be used in conjunction with a target device. The communication apparatus may also be a chip system. The communication apparatus shown in FIG. 8 includes a communication unit 801. The communication unit 801 is configured to transmit and receive data. A receiving unit and a transmitting unit are integrated within the communication unit 801. The communication unit 801 may also be referred to as a transceiver unit. Alternatively, the communication unit 801 may be split into a receiving unit and a transmitting unit. Alternatively, the communication apparatus may further include a processing unit 802, and the processing unit 802 is configured to process data.

The communication unit 801 is configured to receive indication information transmitted by a first access network device, the indication information indicating to a target device to stop performing a first sensing service, the target device being a terminal device or a second access network device, and the target device not supporting a sensing mode updated for a first sensing service.

An embodiment of the present application also provides a chip, and the chip may perform the related steps of the first access network device in the method embodiments mentioned above. The chip includes a processor and a communication interface. The processor is configured to cause the chip to:
transmit first indication information to a target device, the target device being a terminal device or a second access network device;
wherein the first indication information indicates a first sensing mode, the first sensing mode being a sensing mode updated for a first sensing service; or
the first indication information indicates parameter configuration information updated for a second sensing mode, the second sensing mode being a sensing mode used for performing the first sensing service; or
the first indication information indicates information on condition to effectiveness for one or more sensing modes for the first sensing service; or
the first indication information indicates information on switching condition for switching from a third sensing mode to a fourth sensing mode for the first sensing service.

In an implementation, the first indication information indicates the first sensing mode, and the chip is further caused to transmit parameter configuration information corresponding to the first sensing mode to the target device.

In an implementation, the target device is a terminal device, and the parameter configuration information is carried in Radio Resource Control (RRC) signaling or Medium Access Control-Control Element (MAC-CE) signaling or Downlink Control Information (DCI) signaling.

In an implementation, the first indication information indicates the first sensing mode, and the chip is further caused to transmit parameter configuration information corresponding to a plurality of sensing modes for the first sensing service to the target device before transmitting the first indication information to the target device; wherein the first sensing mode is one of the plurality of sensing modes.

In an implementation, the target device is a terminal device, and the first indication information is carried in Medium Access Control-Control Element (MAC-CE) signaling or Downlink Control Information (DCI) signaling.

In an implementation, the first indication information indicates the first sensing mode, and the chip is further caused to receive second indication information transmitted by the target device, the second indication information indicating a sensing mode recommended/preferred for the first sensing service.

In an implementation, the first indication information indicates the first sensing mode via a bitmap, wherein different bit positions in the bitmap correspond to different sensing modes.

In an implementation, the parameter configuration information includes one or more of: configuration information for a sensing signal, configuration information for reporting of a sensing measurement, configuration information for a sensing type, configuration information for a sensing role, and identification information of a terminal transmitting the sensing signal.

In an implementation, the information on condition to effectiveness comprises one or more of:
time information, location information of the terminal device, a threshold for quality of signal, and location information of an object being sensed.

In an implementation, the information on switching condition indicates one or more of:
time information, location information of the terminal device, a threshold for quality of signal, and location information of an object being sensed.

In an implementation, the first indication information indicates information on condition to effectiveness for one or more sensing modes for the first sensing service, or the first indication information indicates information on switching condition for switching from the third sensing mode to the fourth sensing mode for the first sensing service; and the chip is further caused to receive third indication information transmitted by the target device, the third indication information indicating that a switch of a sensing mode has been performed.

In an implementation, the third indication information further indicates an updated sensing mode.

An embodiment of the present application also provides a chip, and the chip may perform the related steps of the target device in the method embodiments mentioned above. The chip includes a processor and a communication interface. The processor is configured to cause the chip to:
receive first indication information transmitted by a first access network device;
wherein the first indication information indicates a first sensing mode, the first sensing mode being a sensing mode updated for a first sensing service; or
the first indication information indicates parameter configuration information updated for a second sensing mode, the second sensing mode being a sensing mode used for performing the first sensing service; or
the first indication information indicates information on condition to effectiveness for one or more sensing modes for the first sensing service; or
the first indication information indicates information on switching condition for switching from a third sensing mode to a fourth sensing mode for the first sensing service.

In an implementation, the first indication information indicates the first sensing mode, and the chip is further caused to receive parameter configuration information corresponding to the first sensing mode transmitted by the first access network device.

In an implementation, the parameter configuration information is carried in Radio Resource Control (RRC) signaling or Medium Access Control-Control Element (MAC-CE) signaling or Downlink Control Information (DCI) signaling.

In an implementation, the first indication information indicates the first sensing mode, and the chip is further caused to receive parameter configuration information corresponding to a plurality of sensing modes for the first sensing service transmitted by the first access network device; wherein the first sensing mode is one of the plurality of sensing modes.

In an implementation, the first indication information is carried in Medium Access Control-Control Element (MAC-CE) signaling or Downlink Control Information (DCI) signaling.

In an implementation, the first indication information indicates the first sensing mode, and the chip is further caused to transmit second indication information to the first access network device, the second indication information indicating a sensing mode recommended/preferred for the first sensing service.

In an implementation, the first indication information indicates the first sensing mode via a bitmap, wherein different bit positions in the bitmap correspond to different sensing modes.

In an implementation, the parameter configuration information includes one or more of: configuration information for a sensing signal, configuration information for reporting of a sensing measurement, configuration information for a sensing type, configuration information for a sensing role, and identification information of a terminal transmitting the sensing signal.

In an implementation, the information on condition to effectiveness comprises one or more of:
time information, location information of the terminal device, a threshold for quality of signal, and location information of an object being sensed.

In an implementation, the first indication information indicates information on condition to effectiveness for one or more sensing modes for the first sensing service, and the chip is further caused to:
perform the first sensing service using a fifth sensing mode in response to a condition to effectiveness corresponding to the information on condition to effectiveness for the fifth sensing mode is satisfied, the fifth sensing mode being one of the one or more sensing modes.

In an implementation, the chip is further caused to stop performing the first sensing service using the fifth sensing mode in response to the condition to effectiveness corresponding to the information on condition to effectiveness for the fifth sensing mode is not satisfied.

In an implementation, the chip is further caused to suspend or stop performing the first sensing service in response to an absence of an effective sensing mode after stopping performing the first sensing service using the fifth sensing mode.

In an implementation, the information on switching condition indicates one or more of:
time information, location information of the terminal device, a threshold for quality of signal, and location information of an object being sensed.

In an implementation, the first indication information indicates information on switching condition for switching from a third sensing mode to a fourth sensing mode for the first sensing service; and the chip is further caused to switch the sensing mode for the first sensing service from the third sensing mode to the fourth sensing mode in response to a switching condition corresponding to the information on switching condition is satisfied.

In an implementation, the first indication information indicates information on condition to effectiveness for one or more sensing modes for the first sensing service, or the first indication information indicates information on switching condition for switching from the third sensing mode to the fourth sensing mode for the first sensing service; and the chip is further caused to transmit third indication information to the first access network device, the third indication information indicating that a switch of a sensing mode has been performed.

In an implementation, the third indication information further indicates an updated sensing mode.

Referring to FIG.9, and FIG. 9 is a schematic structure diagram of a communication device provided by an embodiment of the present invention. The communication device 900 may include a memory 901 and a processor 902. Alternatively, it further includes a communication interface 903. The memory 901, the processor 902, and the communication interface 903 are connected via one or more communication buses. The communication interface 903 is configured to receive or transmit information under the control of the processor 902.

The memory 901 may include read-only memory and random access memory, and provides instructions and data to the processor 902. A part of the memory 901 may also include nonvolatile random access memory.

The communication interface 903 is configured to receive or transmit data.

The processor 902 may be a Central Processing Unit (CPU), or the processor 902 may be another general-purpose processor, a Digital Signal Processor (DSP), an Application Specific Integrated Circuit (ASIC), a Field-Programmable Gate Array (FPGA), or another programmable logic device, discrete gate or transistor logic device, discrete hardware component, etc. The general-purpose processor may be a microprocessor, or alternatively, the processor 902 may be any conventional processor, etc. Where:
The memory 901 is configured to store program instructions.

The processor 902 is configured to invoke the program instructions stored in the memory 901.

The processor 902 invokes the program instructions stored in the memory 901 to cause the communication device 900 to perform the method performed by the first access network device or the target device in the method embodiments mentioned above.

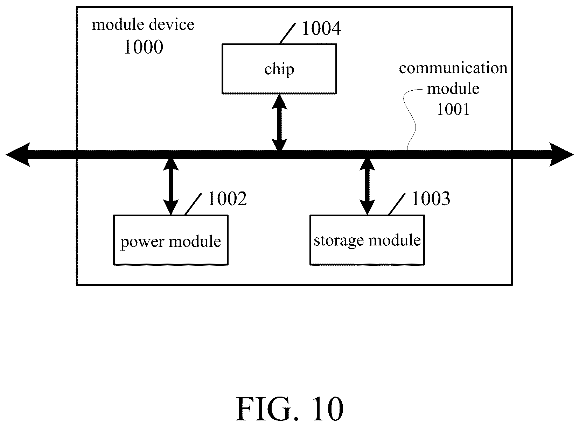

Referring to FIG. 10, and FIG. 10 is a schematic structure diagram of a module device provided by an embodiment of the present application. The module device 1000 may perform the related steps of the first access network device or the target device in the method embodiments mentioned above. The module device 1000 includes: a communication module 1001, a power module 1002, a storage module 1003, and a chip 1004.

The power module 1002 is configured to provide power for the module device; the storage module 1003 is configured to store data and instructions; the communication module 1001 is configured for internal communication within the module device, or for communication between the module device and external devices; and the chip 1004 is configured to perform the method performed by the first access network device or the target device in the method embodiments mentioned above.

It should be noted that content not mentioned in the embodiments corresponding to FIGs. 9 and 10 and the detailed implementation way of each step may be referred to the contents of method embodiments, and will not be repeated herein.

An embodiment of the present application also provides a computer-readable storage medium having instructions stored therein, and when the instructions are executed on a processor, the flow of the method embodiments mentioned above is implemented.

An embodiment of the present application also provides a computer program product, and when the computer program product is executed on a processor, the flow of the method embodiments mentioned above is implemented

Regarding the various modules/units included in various apparatuses and products described in the above embodiments, they may be software modules/units, hardware modules/units, or partly software modules/units and partly hardware modules/units. For example, for apparatuses or products applied to or integrated into a chip, each module/unit included may be implemented in hardware such as circuits, or at least some modules/units may be implemented in software programs executing on a processor integrated into the chip, and the remaining (if any) modules/units may be implemented in hardware such as circuits; for apparatuses or products applied to or integrated into a chip module, each module/unit included may be implemented in hardware such as circuits, and different modules/units may be located in the same component (e.g., chip, circuit module, etc.) or different components of the chip module, or at least some modules/units may be implemented in software programs executing on a processor integrated into the chip module, and the remaining (if any) modules/units may be implemented in hardware such as circuits; for apparatuses or products applied to or integrated into a terminal, each module/unit included may be implemented in hardware such as circuits, different modules/units may be located in the same component (e.g., chip, circuit module, etc.) or different components of the terminal, or at least some modules/units may be implemented in software programs executing on a processor integrated into the terminal, and the remaining (if any) modules/units may be implemented in hardware such as circuits.

It should be noted that for the method embodiments mentioned above, they are described as a series of combination of actions for simplification. However, those skilled in the art should appreciate that the present application is not limited by the described sequence of actions, as some steps may be performed in other sequences or simultaneously according to the present application. Secondly, those skilled in the art should also appreciate that the embodiments described in the specification are all preferred embodiments, and not all the actions and modules involved are required by the present application.

The descriptions of the various embodiments provided in the present application may be cross-referenced, and the description of each embodiment focuses on a respective part. Any details omitted from certain embodiment are provided in the related descriptions of other embodiments. For the convenience and clarity of description, for example, the functions of the apparatuses and devices provided by the embodiments of the present application and the operations performed may be referenced to the related descriptions of the method embodiments of the present application. The various method and apparatus embodiments may also refer to, combine with, or quote each other.

Finally, it should be noted that: the above embodiments are only intended to illustrate the technical solutions of the present application, but not to pose limitations on them. Although detailed description of the present application has been illustrated with reference to the above embodiments, those of ordinary skill in the art should understand that they may still modify the technical solutions described in the above embodiments, or replace some or all of the technical features equivalently. Such modifications or replacements do not make the essence of the corresponding technical solutions to be deviated from the scope of the technical solutions of the embodiments of the present application.

## Claims

1. A method for switching sensing information, **characterized in that** the method comprising:
transmitting first indication information to a target device, the target device being a terminal device or a second access network device;
wherein the first indication information indicates a first sensing mode, the first sensing mode being a sensing mode updated for a first sensing service; or
the first indication information indicates parameter configuration information updated for a second sensing mode, the second sensing mode being a sensing mode used for performing the first sensing service; or
the first indication information indicates information on condition to effectiveness for one or more sensing modes for the first sensing service; or
the first indication information indicates information on switching condition for switching from a third sensing mode to a fourth sensing mode for the first sensing service.

2. The method according to claim 1, **characterized in that** the first indication information indicates the first sensing mode, the method further comprising:
transmitting parameter configuration information corresponding to the first sensing mode to the target device.

3. The method according to claim 2, **characterized in that** the target device is a terminal device, and the parameter configuration information is carried in Radio Resource Control (RRC) signaling or Medium Access Control-Control Element (MAC-CE) signaling or Downlink Control Information (DCI) signaling.

4. The method according to claim 1, **characterized in that** the first indication information indicates the first sensing mode, and before the transmitting the first indication information to the target device, the method further comprising:
transmitting parameter configuration information corresponding to a plurality of sensing modes for the first sensing service to the target device;
wherein the first sensing mode is one of the plurality of sensing modes.

5. The method according to claim 4, **characterized in that** the target device is a terminal device, and the first indication information is carried in Medium Access Control-Control Element (MAC-CE) signaling or Downlink Control Information (DCI) signaling.

6. The method according to any one of claims 1 to 5, **characterized in that** the first indication information indicates the first sensing mode, the method further comprising:
receiving second indication information transmitted by the target device, the second indication information indicating a sensing mode recommended/preferred for the first sensing service.

7. The method according to any one of claims 1 to 6, **characterized in that** the first indication information indicates the first sensing mode via a bitmap, wherein different bit positions in the bitmap correspond to different sensing modes.

8. The method according to any one of claims 1 to 7, **characterized in that** the parameter configuration information includes one or more of: configuration information for a sensing signal, configuration information for reporting of a sensing measurement, configuration information for a sensing type, configuration information for a sensing role, and identification information of a terminal transmitting the sensing signal.

9. The method according to claim 1, **characterized in that** the information on condition to effectiveness comprises one or more of:
time information, location information of the terminal device, a threshold for quality of signal, and location information of an object being sensed.

10. The method according to claim 1, **characterized in that** the information on switching condition indicates one or more of:
time information, location information of the terminal device, a threshold for quality of signal, and location information of an object being sensed.

11. The method according to claim 1 or 9 or 10, **characterized in that** the first indication information indicates information on condition to effectiveness for one or more sensing modes for the first sensing service, or the first indication information indicates information on switching condition for switching from the third sensing mode to the fourth sensing mode for the first sensing service; the method further comprising:
receiving third indication information transmitted by the target device, the third indication information indicating that a switch of a sensing mode has been performed.

12. The method according to claim 11, **characterized in that** the third indication information further indicates an updated sensing mode.

13. A method for switching sensing information, **characterized in that** the method comprising:
receiving first indication information transmitted by a first access network device;
wherein the first indication information indicates a first sensing mode, the first sensing mode being a sensing mode updated for a first sensing service; or
the first indication information indicates parameter configuration information updated for a second sensing mode, the second sensing mode being a sensing mode used for performing the first sensing service; or
the first indication information indicates information on condition to effectiveness for one or more sensing modes for the first sensing service; or
the first indication information indicates information on switching condition for switching from a third sensing mode to a fourth sensing mode for the first sensing service.

14. The method according to claim 13, **characterized in that** the first indication information indicates the first sensing mode, the method further comprising:
receiving parameter configuration information corresponding to the first sensing mode transmitted by the first access network device.

15. The method according to claim 14, **characterized in that** the parameter configuration information is carried in Radio Resource Control (RRC) signaling or Medium Access Control-Control Element (MAC-CE) signaling or Downlink Control Information (DCI) signaling.

16. The method according to claim 13, **characterized in that** the first indication information indicates the first sensing mode, the method further comprising:
receiving parameter configuration information corresponding to a plurality of sensing modes for the first sensing service transmitted by the first access network device;
wherein the first sensing mode is one of the plurality of sensing modes.

17. The method according to claim 16, **characterized in that** the first indication information is carried in Medium Access Control-Control Element (MAC-CE) signaling or Downlink Control Information (DCI) signaling.

18. The method according to any one of claims 13 to 17, **characterized in that** the first indication information indicates the first sensing mode, the method further comprising:
transmitting second indication information to the first access network device, the second indication information indicating a sensing mode recommended/preferred for the first sensing service.

19. The method according to any one of claims 13 to 18, **characterized in that** the first indication information indicates the first sensing mode via a bitmap, wherein different bit positions in the bitmap correspond to different sensing modes.

20. The method according to any one of claims 13 to 19, **characterized in that** the parameter configuration information includes one or more of: configuration information for a sensing signal, configuration information for reporting of a sensing measurement, configuration information for a sensing type, configuration information for a sensing role, and identification information of a terminal transmitting the sensing signal.

21. The method according to claim 13, **characterized in that** the information on condition to effectiveness comprises one or more of:
time information, location information of a terminal device, a threshold for quality of signal, and location information of an object being sensed.

22. The method according to claim 13 or 21, **characterized in that** the first indication information indicates information on condition to effectiveness for one or more sensing modes for the first sensing service, the method further comprising:
performing the first sensing service using a fifth sensing mode in response to a condition to effectiveness corresponding to the information on condition to effectiveness for the fifth sensing mode is satisfied, the fifth sensing mode being one of the one or more sensing modes.

23. The method according to claim 22, **characterized in that** the method further comprising:
stopping performing the first sensing service using the fifth sensing mode in response to the condition to effectiveness corresponding to the information on condition to effectiveness for the fifth sensing mode is not satisfied.

24. The method according to claim 23, **characterized in that** after the stopping performing the first sensing service using the fifth sensing mode, the method further comprising:
suspending or stopping performing the first sensing service in response to an absence of an effective sensing mode.

25. The method according to claim 13, **characterized in that** the information on switching condition indicates one or more of:
time information, location information of the terminal device, a threshold for quality of signal, and location information of an object being sensed.

26. The method according to claim 13 or 25, **characterized in that** the first indication information indicates information on a switching condition for switching from a third sensing mode to a fourth sensing mode for the first sensing service, the method further comprising: switching the sensing mode for the first sensing service from the third sensing mode to the fourth sensing mode in response to a switching condition corresponding to the information on switching condition is satisfied.

27. The method according to claim 22 or 26, **characterized in that** the first indication information indicates information on condition to effectiveness for one or more sensing modes for the first sensing service, or the first indication information indicates information on switching condition for switching from the third sensing mode to the fourth sensing mode for the first sensing service; the method further comprising:
transmitting third indication information to the first access network device, the third indication information indicating that a switch of a sensing mode has been performed.

28. The method according to claim 27, **characterized in that** the third indication information further indicates an updated sensing mode.

29. A communication apparatus, **characterized in that** comprising units for performing the method according to any one of claims 1 to12 or claims 13 to 28.

30. A chip, **characterized in that** comprising a processor and a communication interface, the processor configured to perform the method according to any one of claims 1 to 12, or the processor configured to perform the method according to any one of claims 13 to 28.

31. A module device, **characterized in that** comprising a communication module, a power module, a storage module, and a chip, wherein:
the power module is configured to provide power for the module device;
the storage module is configured to store data and instructions;
the communication module is configured for internal communication in the module device, or for communication between the module device and external devices; and
the chip is configured to perform the method according to any one of claims 1 to 12, or the chip is configured to perform the method according to any one of claims 13 to 28.

32. A communication device, **characterized in that** comprising a memory and a processor, the memory configured to store a computer program, the computer program comprising program instructions, the processor configured to invoke the program instructions to perform the method according to any one of claims 1 to 12, or to perform the method according to any one of claims 13 to 28.

33. A computer-readable storage medium **characterized in that** having computer-readable instructions stored thereon, the computer-readable instructions, when being executed on a communication apparatus, causing the communication apparatus to perform the method according to any one of claims 1 to 12, or causing the communication apparatus to perform the method according to any one of claims 13 to 28.

34. A computer program product, **characterized in that** comprising computer program code, when being executed, causing the method according to any one of claims 1 to 12 or claims 13 to 28 to be performed.
